# EUROPEAN PATENT SPECIFICATION

(11) **EP 2 832 670 B1**
(45) Date of publication and mention of the grant of the patent: **07.09.2016**
(21) Application number: 14179395.0
(22) Date of filing: 31.07.2014
(51) Int. Cl.: B65G 69/00

(54) **A dock ramp assembly and bumper assembly**
Dockrampenanordnung und Stoßfängeranordnung
Ensemble de rampe de quai et ensemble pare-chocs

(30) Priority: 01.08.2013 IE 20130231
(43) Date of publication of application: 04.02.2015
(73) Proprietor: Esidock Limited, Dublin 7 (IE)
(72) Inventor: Whelan, Francis, County Wexford (IE)
(74) Representative: Coyle, Philip Aidan

(56) References cited:
- EP-A1- 1 462 400
- WO-A1-01/81215
- WO-A1-2004/058611

## Description

### Introduction

This invention relates to a dock ramp assembly, and to a bumper assembly.

Dock ramp assemblies are used in facilities to allow transport vehicles to dock with the facility and also allow a ramp, alternatively known as a bridging plate, to connect an interior of the transport vehicle with an interior of the facility. In this manner, unloading of goods from the interior of the transport vehicle into the interior of the facility, or, loading of loads from the interior of the facility into the interior of the transport vehicle, can be achieved in a highly efficient manner.

Furthermore, where the goods must be kept in a controlled environment, for example, having a particular temperature range, dock ramp assemblies are used to create a continuous link, by way of a ramp, between the interior of the transport vehicle and the interior of the facility. Typically the dock ramp assemblies will have a doorway to keep the facility enclosed.

The term "transport vehicle" shall be understood to encompass any type of vehicle used for transporting goods. Typically, the transport vehicle will be an articulated truck and trailer; however, it will be apparent that person skilled in the art that vans and other types of commercial transport vehicles may be used with the dock ramp assembly of the present invention. The transport vehicles will generally have rear opening doors, which are either pivoting doors or vertically arranged sliding or rolling doors, and the transport vehicles dock with the dock ramp assemblies by reversing up to adjacent the dock ramp assembly to load or unload goods through this rear opening door.

Throughout this specification, the term "dock ramp assembly" shall be understood to encompass any type of docking bay used to provide a convenient docking connection between the transport vehicle and the facility. The dock ramp assembly will normally comprise a bridging plate or ramp to connect between the interior of the facility and the docked transport vehicle. The dock ramp assembly of the present invention is suitable to receive transport vehicles of different types and different dimensions; it should be noted that the dock ramp assembly of the present invention does not encompass bespoke dock ramp assemblies which are designed to be used with a fleet of transport vehicles having particular dimensions suited to the bespoke dock ramp assemblies.

Under normal use, dock ramp assemblies as known from the prior art, allow a transport vehicle to dock with them to permit the loading or unloading of goods. The transport vehicle is usually reversed to a position adjacent the dock ramp assembly and a bridging plate is extended from the dock ramp assembly into the transport vehicle. The dock ramp assemblies comprise a bumper to prevent the transport vehicle from reversing into the dock ramp assembly and damaging the dock ramp assembly.

In some cases, once the transport vehicle has been reversed to a position adjacent the dock ramp assembly, a quasi-seal is created around the top and sides of the transport vehicle to prevent external contaminants from entering either the interior of the facility, or, the interior of the transport vehicle during the loading/unloading process. This is particularly important in food-related industries where unwanted contaminants such as rodents, insects, flies and fleas, which could become trapped in the interior of the transport vehicle, can result in an entire load of transported food being rejected by a receiving customer upon the customer opening the transport vehicle and discovering the unwanted contaminants therein.

As the dock ramp assemblies of the present invention, and of the prior art referred to, must accommodate transport vehicles of different types and dimensions, none of tie dock ramp assemblies have been able to create a full seal around the transport vehicle docked to the dock ramp assembly. This is due to the fact that the transport vehicles have different floor heights and a lower seal which can accommodate the varying different heights of the different transport vehicles has proved difficult to design. Most transport vehicles have a loading height in the range of 1 metre to 1.4 metres and the seals currently used in dock ramp assemblies known from the prior art cannot accommodate such variations in height between different transport vehicles.

The problem is further exacerbated by the presence of the bumper which protects the dock ramp assembly from damage by transport vehicles as they reverse up to the dock ramp assembly. The bumper prevents a lower seal on the bottom of the periphery of the docking ope from extending in an uninhibited manner to create a seal against the underside of the transport vehicle.

WO0181215 discloses the preamble of claim 1, meaning a bumper assembly (12) for a loading dock (10) including a bumper (14) that is moveable between an operative position and a stored position. In the operative position, the bumper (14) extends well above the dock platform (10) to prevent excessively high trucks, trailer beds, and cargo container from being parked over the top of the dock platform (10). In the stored position, the bumper (14) is positioned so as not to obstruct loading and unloading of cargo. In some cases, the bumper (14) is biased to the operative position to encourage operators to normally leave the bumper (14) in that position. In some embodiments, the bumper (14) is selectively moveable away from the vehicle or container that the bumper (14) is blocking to facilitate subsequently moving the bumper (14) to its stored position.

It is a goal of the present invention to provide an apparatus that overcomes at least one of the above mentioned problems.

### Summary of the Invention

The present teaching provides a bumper assembly as detailed in claim 1. Advantageous features are provided in dependent claims.

The present invention is directed to a dock ramp assembly comprising a fixed framework defining a docking ope suitable for docking with a transport vehicle; the fixed framework mounting an actable seal having a retracted, inoperable state and an extended, operable state; the dock ramp assembly further comprising a bridging plate, having a stored position and an in-use position; wherein, the actable seal is located around a periphery of the docking ope so as to form a complete seal around the transport vehicle when the transport vehicle is docked with the docking ope and the actable seal is in its extended, operable state.

The advantage of providing the actable seal which is located around the entire periphery of the docking ope so as to form a complete seal around the transport vehicle when the transport vehicle is docked with the docking ope and the actable seal is in its extended, operable state, is that, a seal is created around the entire transport vehicle, thus creating a sealed passageway between the interior of the transport vehicle and the interior of the facility. The sealed passageway between the interior of the transport vehicle and the interior of the facility prevents any external contaminants, such as rodents, insects, fleas and flies from entering either the interior of the facility or interior of the transport vehicle. This ensures that any goods which need to be transported by the transport vehicle can be kept within a controlled environment, inside the interior of the facility, which is likely to be a food production plant or a manufacturing plant, through the sealed passageway and into the interior of the transport vehicle. This is extremely desirable for many industries, and as mentioned above, in particular the food industry where the manufacture, storage and transport of the food in a fully controlled environment is preferable from a hygienic, and, a health and safety perspective.

In a preferred embodiment, the bridging plate is rotatable from the stored position into the in-use position, whereby, in its in-use position the bridging plate protrudes into the transport vehicle when the transport vehicle is docked with the docking ope.

In a preferred embodiment, the bridging plate is telescopically extendable from the stored position into the in-use position, whereby, in its in-use position the bridging plate abuts against a rear end of the transport vehicle when the transport vehicle is docked with the docking ope.

The present invention is further directed to a dock ramp assembly comprising a fixed framework defining a docking ope suitable for docking with a transport vehicle; the fixed framework mounting a seal for sealing the docking ope with the transport vehicle when the transport vehicle is docked with the docking ope; the dock ramp assembly further comprising a bridging plate having a stored position and an in-use position, whereby, in its in-use position the bridging plate protrudes into or abuts against the transport vehicle when the transport vehicle is docked with the docking ope; wherein, the seal is located around a periphery of the docking ope, and, a portion of the seal is moveable so as to allow a seal to be formed completely around the transport vehicle.

This embodiment of the present invention is advantageous as a seal can be formed completely around the docked transport vehicle to ensure that no unwanted contaminants can enter the transport vehicle, dock ramp assembly or facility when the transport vehicle is docked to the dock ramp assembly by only moving a portion of the seal. By only having to articulate a portion of the seal, the construction of the dock ramp assembly is simplified. The seal, which may be permanently in an operable state or may be actable to be transitionable into an operable state, is moveable as this allows a bumper to be used to protect the dock ramp assembly as the transport vehicle drives up to the docking ope, and subsequently allows the portion of the seal to be moved into position to create a complete seal around the transport vehicle, which would otherwise not have been possible due to the presence of the bumper.

In a further embodiment, the seal is an actable seal having a retracted, inoperable state and an extended, operable state.

In a further embodiment, the portion of the seal which is moveable is a lower, substantially horizontal linear seal. The lower, substantially horizontal linear seal is moved into position in front of a retractable bumper.

In a further embodiment, the dock ramp assembly further comprises a retractable bumper which is transitioned from an extended, in-use position in front of the docking ope, to, a retracted, stored position remote from the docking ope.

This is particularly advantageous as the bumper can be transitioned to a retracted, stored position which is remote from the docking ope, and therefore does not block the docking ope. Furthermore, the retraction of the bumper allows a lower seal to be created on the bottom side of the transport vehicle, thus facilitating the creation of the seal completely around the periphery of the docking ope. It will be readily understood that that retractable bumper in its retracted, stored position remote from the docking ope encompasses the scenarios where the retractable bumper is completely remote from the docking ope, and also the where the retractable bumper has been moved away from being in front of the docking ope, but may form part of an edge of the docking ope. In essence, the retractable bumper is moved to allow space for the lower seal from the bottom of the docking ope to be established against an underside of the transport vehicle.

In a further embodiment, the actable seal is formed by an upper arch-shaped seal and a lower, substantially horizontal linear seal; the upper arch-shaped seal being located around an upper edge and side edges of the periphery of the docking ope; and, the lower, substantially horizontal linear seal being located on a moveable mounting plate which moves vertically from a stored position remote from the docking ope, into, an in-use position in front of a lower edge of the periphery of the docking ope when the retractable bumper is in its retracted, stored position remote from the docking ope. This is seen to be particularly advantageous as the movable mounting plate allows the lower seal to be transitioned into position, preferably at a suitable height for the transport vehicle, so that the compete seal can be created.

In a further embodiment, the dock ramp assembly is connected to a facility; the fixed framework defines a receiving cavity between a docked transport vehicle and the facility; the dock ramp assembly further comprising a pump to pressurise the receiving cavity to a preset level to check the integrity of the actable seal in its extended, operable state. Preferably the integrity of the actable seal is checked by pressurising the receiving cavity to a preset threshold and monitoring the pressure level in the receiving cavity for a period of time thereafter.

In a further embodiment, the dock ramp assembly comprises a controlled hatch between the receiving cavity and an exterior of the dock ramp assembly; the controlled hatch being opened to allow pressurised air to escape through the hatch and purge the receiving cavity of unwanted contaminants. In this manner, the receiving cavity can be purged of any contaminants, such as insects or fleas, prior to creating the sealed passageway between the interior of the transport vehicle and the interior of the facility.

In a further embodiment, the dock ramp assembly comprises an anti-contaminant gas which is injected to the receiving cavity. The anti-contaminant gas may preferably be an anti-bacterial gas such as an insecticide or a disinfectant which can fumigate the receiving cavity to ensure that the receiving cavity is sufficiently purged and free of any contaminants.

In a further embodiment, the anti-contaminant gas is injected into the receiving cavity using the pump, during pressurisation of the receiving cavity.

In a further embodiment, the moveable mounting plate is held between a pair of substantially vertical guide rails which guide the moveable mounting plate vertically from its stored position remote from the docking ope, into, its in-use position in front of the lower edge of the periphery of the docking ope; and, the moveable mounting plate is deflectable about its in-use position to accommodate height variations of the transport vehicle as the docked transport vehicle is loaded or unloaded with goods.

In a further embodiment, the upper arch-shaped seal is formed by a substantially horizontal linear top seal and a pair of linear side seals. Preferably the substantially horizontal linear top seal and the pair of linear side seals are orthogonally arranged to form the arch-like seal.

In a further embodiment, the pair of linear side seals are angled to extend upwardly and diagonally outwardly at an angle of between 10° and 30°. This is advantageous as many of the yards where the dock ramp assemblies are located tend to slope downwardly away from the dock ramp assembly and therefore any transport vehicle docked with the dock ramp assembly will also tend to slope away from the dock ramp assembly. Consequently, in order to ensure a functioning seal around the transport vehicle, it is advantageous to have the pair of linear side seals angled at between 10° and 30° from the horizontal.

In a further embodiment, the actable seal is formed by an inflatable bladder. In a further embodiment, the inflatable bladder comprises a plurality of inflatable bladders located around the periphery of the docking ope.

The present invention is further directed towards a method of docking a transport vehicle with a facility using a dock ramp assembly connected to the facility, the method forming a complete seal between the dock ramp assembly and the transport vehicle and comprising the steps of driving the transport vehicle to a position adjacent a docking ope in the dock ramp assembly; and, moving a portion of a seal to form tie complete seal between the dock ramp assembly and the transport vehicle

In a further embodiment, the method further comprises the steps of pressurising a receiving cavity, created between the facility and the transport vehicle, to a preset threshold; after pressurising the receiving cavity, monitoring the pressure in the receiving cavity to check that the pressure in the receiving cavity does not drop by more than a predetermined amount over a defined period.

In a further embodiment, the method further comprises the steps of, after checking that the pressure in the receiving cavity does not drop by more than a predetermined amount over a defined period, purging the receiving cavity of unwanted contaminants by opening a controlled hatch on the dock ramp assembly to allow a sudden release of air from the pressurised receiving cavity.

In a further embodiment, the method further comprises the steps of immediately prior to purging the receiving cavity, fumigating the receiving cavity using an anti-bacterial gas which is injected into the receiving cavity.

In a further embodiment, the method further comprises the steps of moving a bridging plate to form a ramp between an interior of the transport vehicle and an interior of the facility.

In another aspect of the invention there is provided a bumper assembly for engaging a transport vehicle at a loading dock.

The bumper assembly preferably comprises at least one movable bumper.

More preferably the bumper assembly comprises at least two moveable spaced apart bumpers. Each bumper is preferably mounted in a bumper housing.

Preferably each bumper housing is mounted at an end of a base frame.

Each bumper is preferably moveable relative to the bumper housing from a retracted position to an operative position.

The bumper is movable by a suitable actuator.

Preferably the actuator is a hydraulic ram.

The bumper is preferably mounted on a support frame which is movable within the bumper housing.

The support frame is preferably of a hollow box frame structure.

The bumper housing preferably has a pair of guide channels in which are received flanges of the support frame to guide movement of the support frame in a diagonal direction.

Preferably the guide channels are of greater width than the thickness of the flanges so that in the operative position the bumper support frame can move transversely relative to the bumper housing.

Preferably, the movement of the support frame relative to the bumper housing occurs in the operative position of the bumpers when the bumpers are engaged by a transport vehicle at a loading dock.

The movement of the support frame preferably creates two impact zones on the bumper housing. One impact zone is adjacent a top edge of a rear wall of the bumper housing. Another impact zone is in the guide channel adjacent the lower edge of the flanges on the support frame.

Preferably, the mounting of the bumper support frame on a ram, facilitates pivotal movement of the support frame relative to the bumper housing.

Advantageously, the movement of the support frame into abutment with the bumper housing, creates at least two impact zones and ensure that the impact force of a transport vehicle against a bumper, is borne by the bumper housing and/or bumper support frame. Any impact force is therefore substantially transverse to the operative direction of the rams.

One end of the hydraulic ram is preferably mounted to a base of the bumper housing and is mounted at the other end to a rear wall of the box frame.

A hydraulic pump for operating the hydraulic ram is preferably disposed within the base frame.

Preferably the bumper and support frame move between a retracted or stored position in which the bumper is located substantially flush with a front wall of the base frame, to an operative or raised position in which the bumper is disposed above and forwardly of the front wall of the base frame.

Preferably, suitable limit switches are provided to control the upper and lower positions of the bumper.

### Detailed Description of Embodiments

The invention will be more clearly understood from the following description of some embodiments thereof, given by way of example only, with reference to the accompanying drawings, in which:
Figure 1 is a partially exposed, perspective view of a dock ramp assembly in accordance with the present invention;
Figure 2 is a side elevational sectional view of the dock ramp assembly of Figure 1 showing dock bumpers extended to receive a transport vehicle;
Figure 3 is a side elevational sectional view of the dock ramp assembly of Figure 1 shown receiving the transport vehicle;
Figure 4 is a side elevational sectional view of the dock ramp assembly of Figure 1 showing the dock bumpers retracted and a lower seal mounting plate raised, having received the transport vehicle;
Figure 5 is a side elevational sectional view of the dock ramp assembly of Figure 1 showing an upper seal and side seals inflated in abutment against the transport vehicle;
Figure 6 is a side elevational sectional view of the dock ramp assembly of Figure 5 showing a lower seal also inflated in abutment against the transport vehicle;
Figure 7 is a side elevational sectional view of the dock ramp assembly of Figure 6 showing a dock ramp assembly door in its opened state;
Figure 8 is a side elevational sectional view of the dock ramp assembly of Figure 7 showing rear doors of the transport vehicle opened and a bridging plate in its in-use position protruding into the transport vehicle;
Figure 9 is a partially exposed, perspective view of a dock ramp assembly in accordance with a further embodiment of the present invention;
Figure 10. is a perspective view of a bumper assembly according to another aspect of the invention with the bumper in a retracted position;
Figure 11 is a perspective view of the bumper assembly of Figure 10 with the bumpers in an extended or operative or in use position;
Figure 12 is a perspective view of the bumper assembly of Figure 10 showing the hydraulic motor in the base frame;
Figure 13 is a schematic side view of the bumper housing of the assembly of Figure 10;
Figure 14 is a schematic side view of the bumper housing of Figure 11 with the bumper in an extended position;
Figure 15 is a schematic sectional view of the bumper housing of Figure 11 showing impact zones, and;
Figure 16 is an exploded view of a bumper housing.

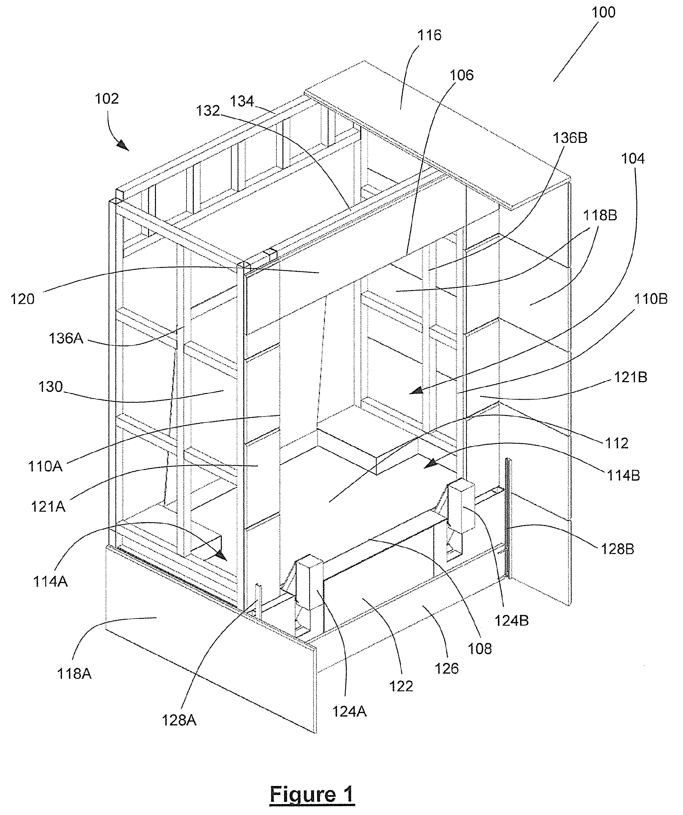

Referring to Figure 1, there is provided a dock ramp assembly indicated generally by reference numeral 100. The dock ramp assembly 100 may be retrofitted to an existing facility (not shown).

The dock ramp assembly 100 comprises a fixed framework indicated generally by reference numeral 102. A forward side of the fixed framework 102 defines a docking ope indicated generally by reference numeral 104. A rearward side of the fixed framework 102 will abut against and be connected to the facility.

The docking ope 104, on the forward side, is defined by an upper edge 106, a lower edge 108 and side edges 110A, 110B which are adjacent to the periphery of the docking ope 104.

A facility ope (not shown) leading into the facility will be provided adjacent the rearward side of the fixed framework 102 and will be encompassed by the dock ramp assembly 100.

The dock ramp assembly 100 comprises a floor 112 having side wings indicated generally by reference numerals 114A, 114B which are dimensioned to receive a rearward opening door (not shown) on a transport vehicle (not shown).

The framework 102 is covered by roof panels 116, only one of which is shown in Figure 1, and side panels 118A, 118B, only some of which are shown in Figure 1. The roof panels 116 and side panels 118A, 118B comprise extended portions which protrude away from the framework 102 to form a porch in front of the docking ope 104. These extended portions of the roof panels 116 and side panels 118A, 118B partially form the periphery of the docking ope 104. The periphery of the docking ope 104 is also formed by an upper face panel 120, side face panels 121A, 121 B and a lower face panel 122.

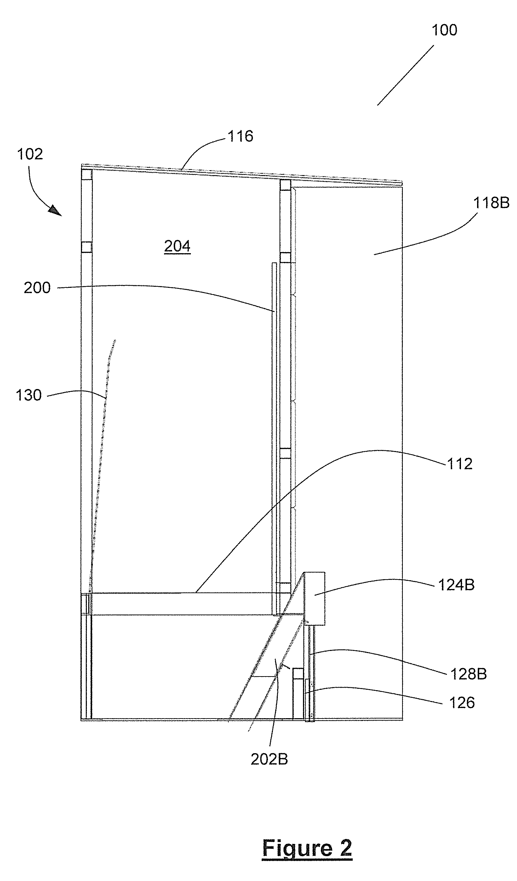

Two retractable bumpers 124A, 124B are located adjacent the lower edge 108 of the docking ope 104. The retractable bumpers 124A, 124B may be transitioned from an extended, in-use position in front of the docking ope 104, to, a retracted, stored position remote from the docking ope 104. In Figure 1, the retractable bumpers 124A, 124B are shown in their extended, in-use position which locates the retractable bumpers 124A, 124B in front of the docking ope 104. In a preferred embodiment, the retractable bumpers 124A, 124B transition diagonally outwardly to a position which is approximately 200mm in front of the lower face 122 of the docking ope 104 and 400mm above the lower edge 108 of the docking ope 104. The lower edge 108 of the docking ope 104 will preferably be 1.2 metres above a lowermost portion of the lower front face panel 122 of the dock ramp assembly 100. The retractable bumpers 124A, 124B are moved from their extended, in-use position in front of the docking ope 104, to, their retracted, stored position remote from docking ope 104 by hydraulic rams (reference numeral 202B in Figure 2). It will be appreciated that other driven means may be used to move the retractable bumpers 124A, 124B from their extended, in-use position in front of the docking ope 104, to, their retracted, stored position remote from docking ope 104.

A movable mounting plate 126 is held between a pair of substantially vertical guide rails 128A, 128B which guide the movable mounting plate 126 vertically between a stored position which is remote from the docking ope 104 and an in-use position in front of the lower edge 108 of the docking ope 104. The movable mounting plate 126 is moved vertically along the guide rails 128A, 128B by a pulley mechanism (not shown). It will be understood that in other embodiments, driven means such as motors, pneumatic lifts, hydraulic rams and the like may be used to lift and lower the movable mounting plate 126 along the length of the substantially vertical guide rails 128A, 128B. The movable mounting plate 126 is deflectable about its in-use position. That is to say, the movable mounting plate 126, through urging means, is biased towards its in-use position but can be deflected downwardly along a portion of the guide rails 128A, 128B in order to accommodate a lowering in the height of the transport vehicle (not shown) as goods are loaded into the transport vehicle.

A bridging plate 130, which may alternatively be known as a ramp, is located in the dock ramp assembly 100 and is rotatable between a stored position, which is usually a substantially vertical, upright position, into an in-use position which is usually a substantially horizontal position. The bridging plate 130 may be manually rotated or maybe rotated by a driven means such as a hydraulic ram (not shown). Furthermore, the bridging plate 130 may be telescopically extendable to abut against a rearward side of the transport vehicle to allow goods to be loaded or unloaded from the transport vehicle. Such telescopically extending bridging plates are particularly useful when the transport vehicle is loaded with goods which are stacked up to the very end of the transport vehicle. It will also be understood that a telescopic dock leveller could be used with the dock ramp assembly 100.

For clarity, the actable seal which forms part of the dock ramp assembly 100 is not shown in Figure 1. However, it will be easily understood by a person skilled in the art that the actable seal is located around the periphery of the docking ope 104. The actable seal has a retracted, inoperable state and an extended, operable state. When in its extended, operable state, the actable seal forms a complete seal around a transport vehicle when the transport vehicle is docked with the docking ope 104. In a preferred embodiment, the actable seal is formed from inflatable bladders which when inflated, come into contact with and abut against a trailer portion of the transport vehicle so as to form a sealed passageway between the interior of the transport vehicle, through the dock ramp assembly 100, into an interior of the facility. In the present embodiment shown of Figures 1 to 8, the actable seal is comprised of a separate substantially horizontal linear top seal, a pair of linear side seals and a substantially horizontal linear lower seal. The substantially horizontal linear top seal is mounted on an underside of the extended portions of the roof panels 116; and, the linear side seals are mounted on an inner face of the extended portions of the side panels 118A, 118B. The lower seal is mounted on the movable mounting plate 126.

In a further embodiment of the invention, it will be readily understood that the actable seal may comprise an upper arch-shaped seal and the substantially horizontal linear lower seal. In this further embodiment, the upper arch-shaped seal is located around the upper edge 106 and side edges 110A, 110B of the docking ope 104 by mounting the arch-shaped seal on the other face panel 120 and side face panels 121A, 121 B of the dock ramp assembly 100. The substantially horizontal linear lower seal would remain mounted on the movable mounting plate 126.

The framework 102 comprises a forward docking-ope-defining frame 132, a rearward facility-abutting frame 134 and supporting side frames 136A, 136B.

Referring now to Figures 2 to 8, wherein like parts previously described have been assigned the same reference numerals, the operation of the dock ramp assembly 100 will now be described.

With reference to Figure 2, a dock ramp assembly door 200 is shown in its closed position, which closes the docking ope 104. One of the hydraulic rams 202B is shown, and is in its extended state causing the retractable bumper 124B to also be in its extended in-use position in front of the docking ope 104. It will be understood that the same, mutatis mutandis, applies to the unseen hydraulic ram for the other retractable bumper 124A. Thus, the retractable bumpers 124A, 124B are in their extended, in-use positions in front of the docking ope 104 to protect the docking ope 104 from any damage by a reversing transport vehicle. The movable mounting plate 126 is in its stored position remote from the docking ope 104. The fixed framework 102 of the dock ramp assembly 100 defines a receiving cavity 204 within the dock ramp assembly 100.

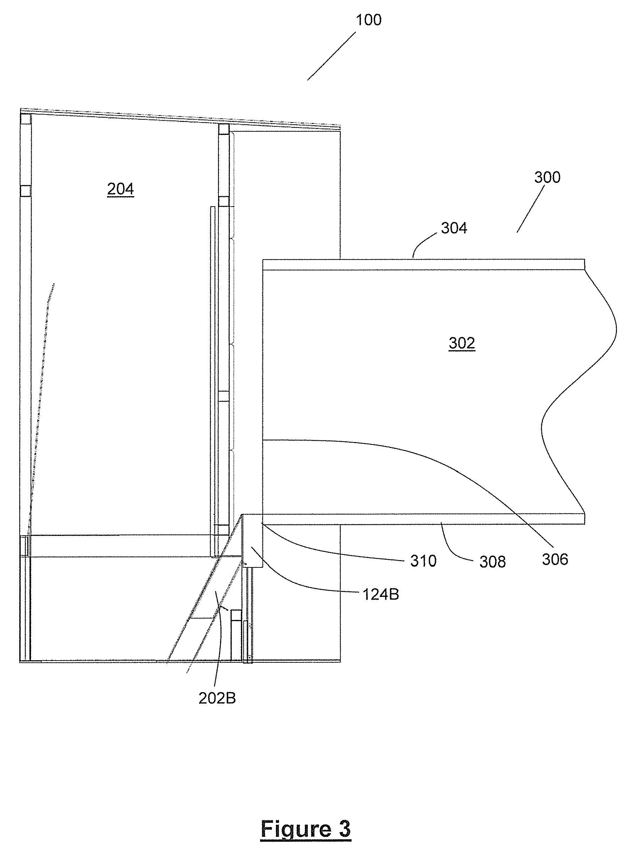

In Figure 3, it can be seen that a transport vehicle indicated generally by reference numeral 300 is in the process of docking with the dock ramp assembly 100 by reversing to a position adjacent the docking ope 104.

The transport vehicle 300 comprises an interior 302 defined by a roof 304 of the transport vehicle 300, a rearward door 306 of the transport vehicle 300, and, an underside 308 of the transport vehicle. A lower, rearward edge 310 of the transport vehicle 300 contacts against the retractable bumpers 124A, 124B.

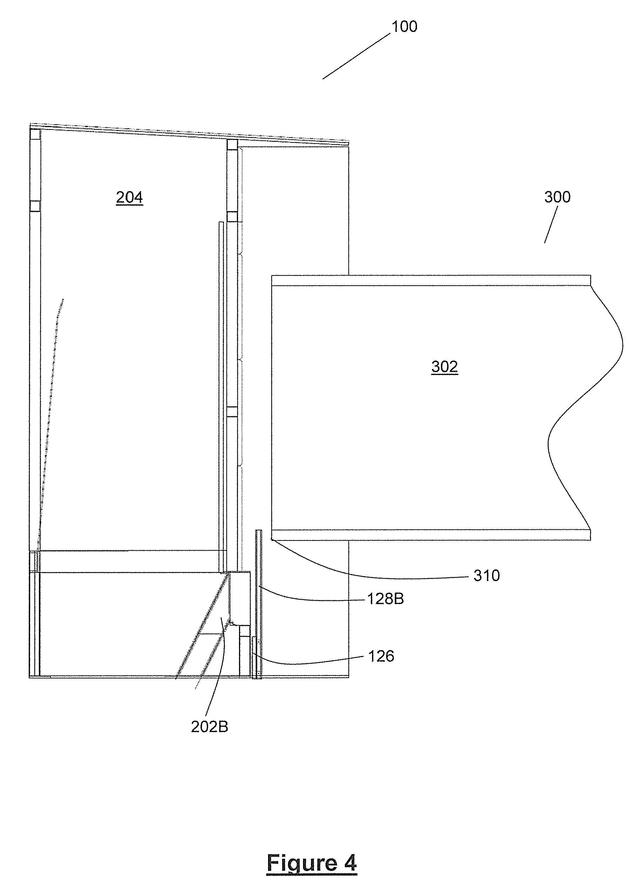

In Figure 4, the retractable bumpers 124A, 124B are transitioned from their extended, in-use position into their retracted, stored position remote from the docking ope 104.

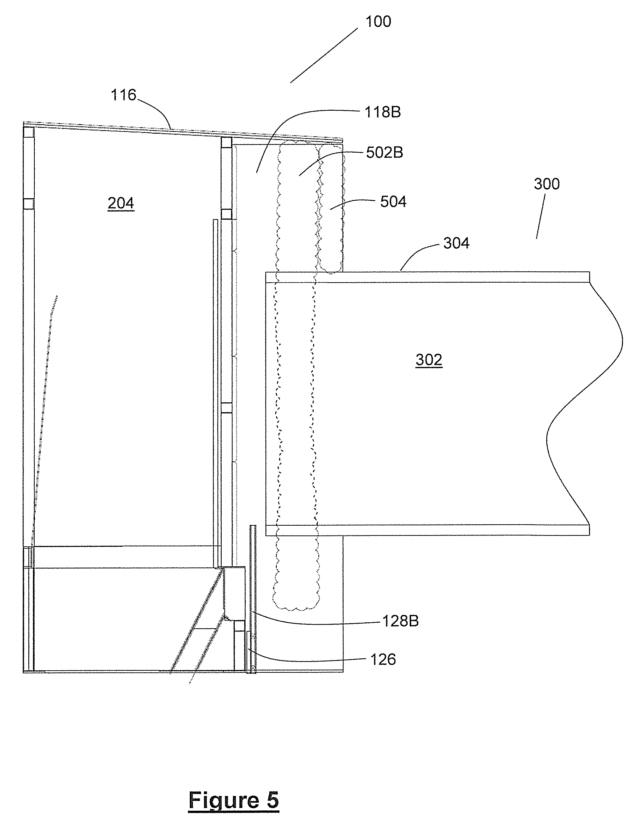

In Figure 5, the substantially horizontal linear top seal 504, which is comprised of an inflatable bladder in this embodiment, is inflated into its extended, operable state to depend from an underside of the extended portion of the roof panels 116 to abut against the roof 304 of the transport vehicle 300. The linear side seal 502B, which is comprised of an inflatable bladder in this embodiment, is inflated into its extended, operable state to jut out from an inside face of the extended portion of the side panel 118B to abut against the side of the transport vehicle 300. It will of course be understood that a similar inflation of the linear side seal on the other side of the transport vehicle 300 also occurs.

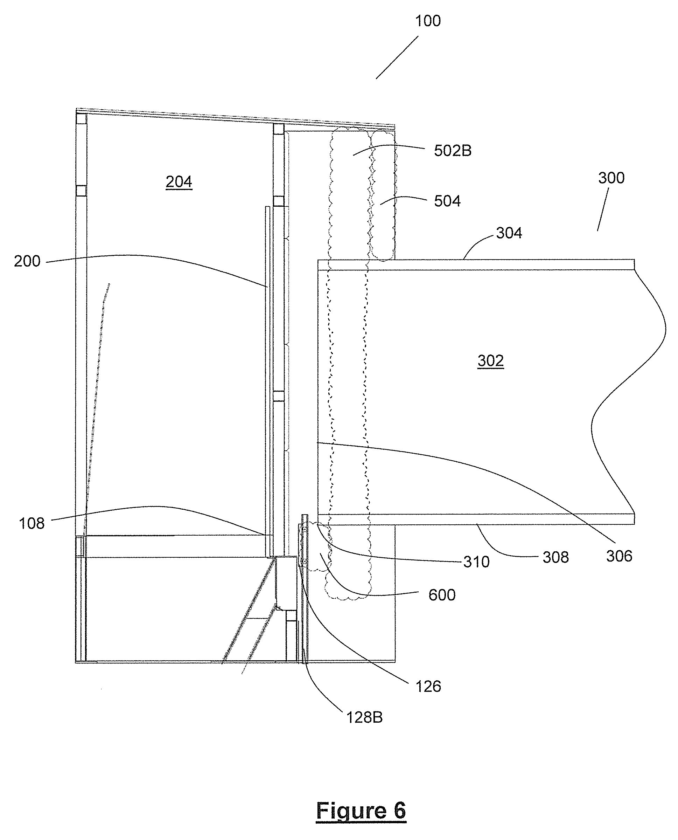

In Figure 6, the movable mounting plate 126 is lifted upward by guiding it along the guide rails 128A, 128B into its in-use position in front of the lower edge 108 of the docking ope 104. The substantially vertical linear lower seal 600 which is mounted on the movable mounting plate 126 is inflated so that it abuts with the lower, rearward edge 310 and underside 308 of the transport vehicle 300.

In their extended, operable states, the substantially horizontal linear top seal 504, the linear side seal 502B and other linear side seal (not shown), and, the substantially vertical linear lower seal 600 abut against one another and the transport vehicle 300 so as to form a sealed passageway, from the interior at 302 of the transport vehicle 300, through the receiving cavity 204 of the dock ramp assembly 100, to an interior of the facility (not shown).

Once the actable seal has been extended into its operable position, a pump (not shown) is used to pressurise the receiving cavity 204. Pressurisation of the receiving cavity 204 can be used to check the integrity of the sealed passageway.

In a preferable embodiment, the dock ramp assembly 100 further comprises a controlled hatch (not shown) which can be opened to allow pressurised air in the receiving cavity 204 to escape. After pressurising the receiving cavity 204 to a relatively high pressure in comparison to the ambient atmosphere, the controlled hatch can be opened causing the pressurised air to suddenly escape through the controlled hatch. This sudden depressurisation of the receiving cavity 204 will cause any contaminants, such as insects, flies and fleas that have been trapped in the receiving cavity 204 to be expelled from the receiving cavity 204. In this manner, the dock ramp assembly 100 is purged of unwanted contaminants. The controlled hatch is closed shortly after purging the receiving cavity 204 in order to maintain the integrity of the sealed passageway.

In yet a further embodiment, an anti-contaminant gas may be introduced into the receiving cavity 204 to fumigate the receiving cavity and to hence purge and sterilise the receiving cavity 204. In a preferable embodiment, the anti-contaminant gas may be an anti-bacterial agent, a bactericide or a fungicide.

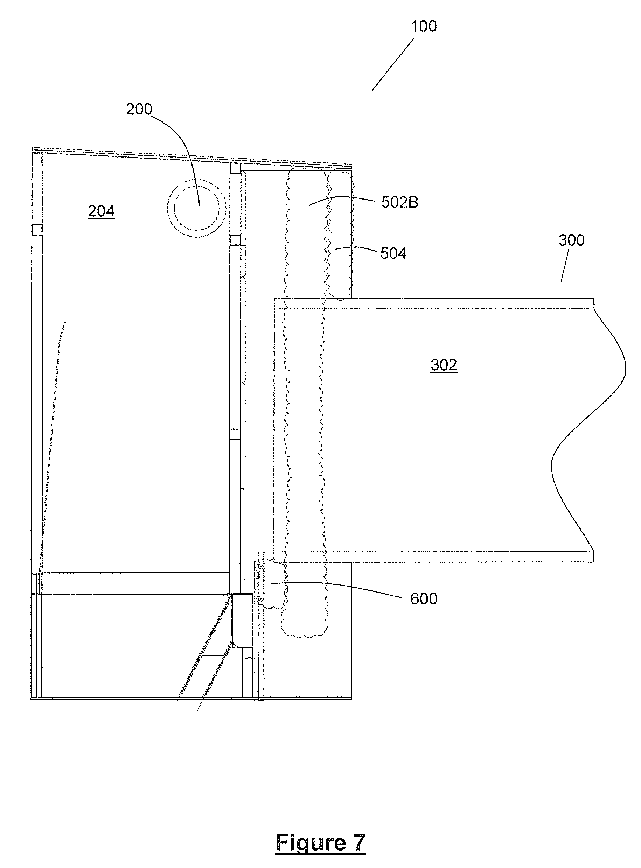

Returning now to Figure 7, once a controller (not shown) is content that the receiving cavity 204 has been purged of any contaminants, and the controlled hatch is closed, the dock ramp assembly door 200 is opened. In the present embodiment, a roller door is used those will be appreciated that any type of known docking bay door may be used.

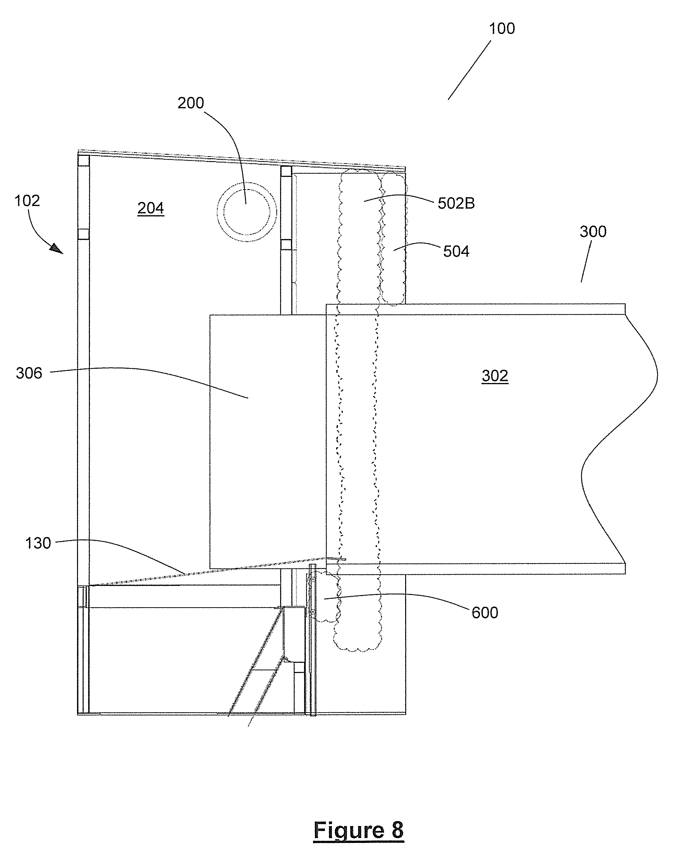

With reference to Figure 8, the rearward door 306 of the transport vehicle 300 is opened and the bridging plate 130 is rotated to protrude into the interior 302 of transport vehicle 300 in order to create a substantially continuous planar surface, by way of a ramp, for the loading and unloading of goods between the transport vehicle 300 and the facility. Finally, the facility ope door (not shown) into the facility can be opened.

As can be seen, the creation of a seal which completely surrounds the transport vehicle 300 is highly advantageous as a sealed passageway is created using the receiving cavity 204. This is achievable by using the retractable bumpers 128A, 128B and movable mounting plate 126 having the substantially vertical linear lower seal 600 mounted thereon.

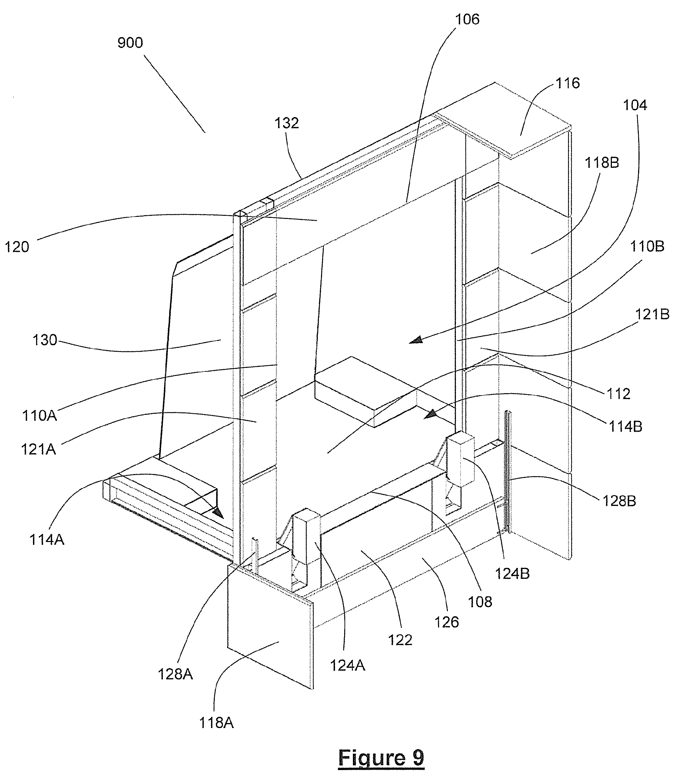

With reference now to Figure 9, with like parts previously described having the same reference numerals, there is provided a further embodiment of a dock ramp assembly indicated generally by reference numeral 900. Whereas the dock ramp assembly 100 of the above-described embodiment could be retro-fitted to an existing facility, the dock ramp assembly 900 of this second described embodiment is designed to be installed during the construction of a new facility. The rearward facility-abutting frame 134 and supporting side frames 136A, 136B are unnecessary as these can be replaced by the superstructure of the new facility. The forward docking-ope-defining frame 132 remains but in this embodiment, the facility ope door (not shown) will be located in the docking ope 104. As a consequence, the receiving cavity (not indicated) will be relatively thin in this embodiment, formed as it will between the facility ope door and the rearward door of the transport vehicle.

As can be imagined, the floor 112 and the side wings indicated generally by reference numerals 114A, 114B are inside the facility, on the facility side of the facility ope door (not shown). Furthermore, the bridging place 130 is also located within the facility.

In this embodiment, the floor panels 116 and side panels 118A, 118B entirely form the porch of the dock ramp assembly 900.

The features of the dock ramp assembly 900 remain, mutatis mutandis, otherwise unchanged. In particular, a transport vehicle (not shown) may be reversed up to abut against the retractable bumpers 124A, 124B. The retractable bumpers 124A, 124B are then retracted to allow the movable mounting plate 126 to be raised adjacent the lower, rearward edge of the transport vehicle. The actable seal, including the lower seal on the moveable mounting plate 126, can be extended into its operable state so as to form a complete seal around the transport vehicle when the transport vehicle is docked with the docking ope 104. The thin receiving cavity formed between the docking ope 104 and the rearward door of the transport vehicle can be pressurised to check the integrity of the seal. As described here in above, further purging, cleansing and sterilisation techniques may also be applied. Once the receiving cavity is deemed suitable by a controller as having formed a hygienic, sealed passageway, the facility ope door (not shown) is opened to subsequently allow the rearward door of the transport vehicle to be opened into the facility. Finally, the bridging plate 130 is rotated to protrude into an interior of the transport vehicle, or may be telescopically extended to abut against a side of the transport vehicle.

It will be understood that the dock ramp assembly, and in particular the receiving cavity, may be located within an interior of the facility. In such an embodiment, the receiving cavity would create an enclosed space within the confines of the facility.

The term "actable seal" when used in context of the preceding specification will be understood to refer to a seal which can act to transition itself between an operable state and an inoperable state. It will be understood that the act could comprise inflation and deflation of a sealing bladder, mechanical extension and retraction of a sealing lip, and the like.

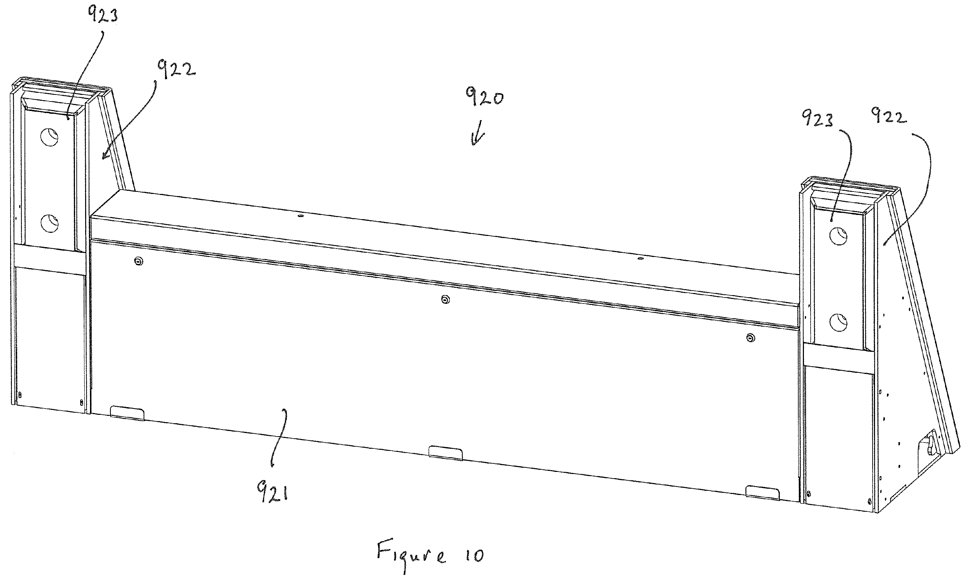

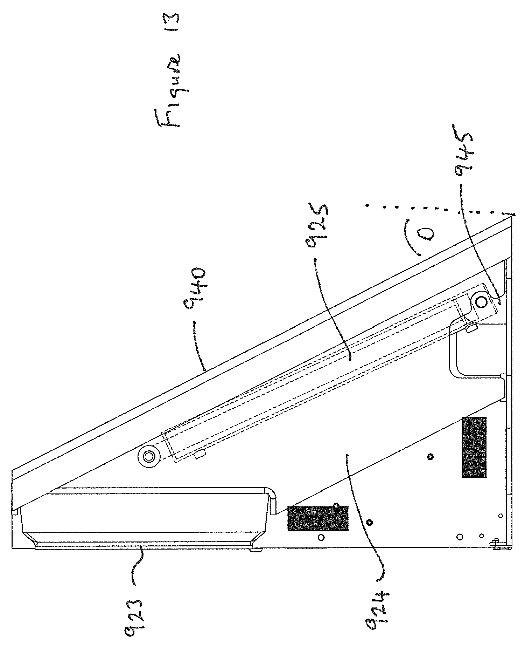

Referring now to Figures 10 - 16 there is shown therein a bumper assembly 920 for engaging a transport vehicle at a loading dock, according to another as pect of the invention. The bumper assembly 920 comprises an elongate base frame 921 and a bumper housing 922 mounted at each end of the base frame 921. A bumper 923 is mounted on a respective support frame 924. Each bumper 923 comprises a block of rubber, fixed to the support frame 924. Each support frame 924 is of a hollow box frame structure.

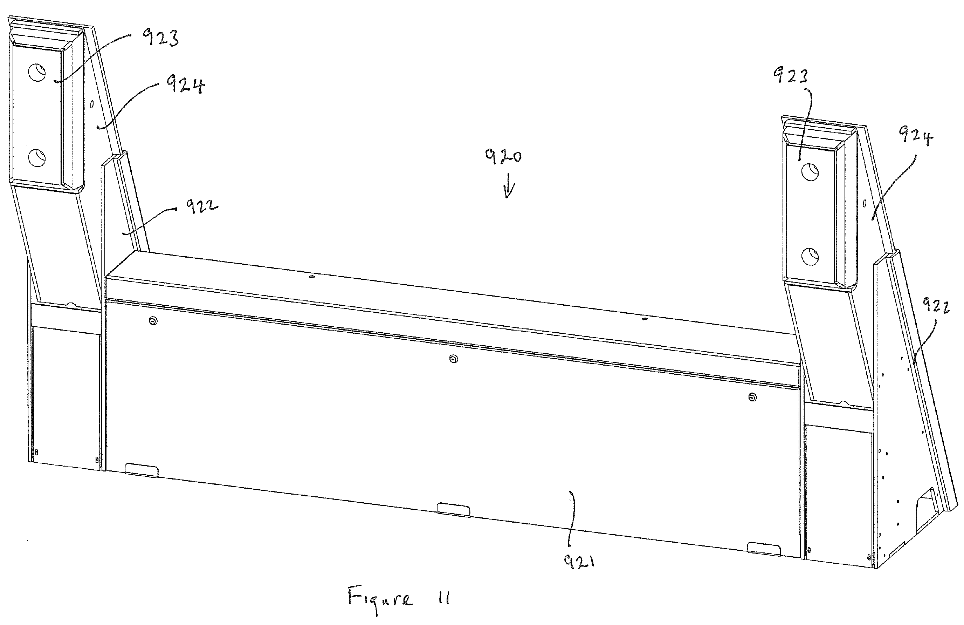

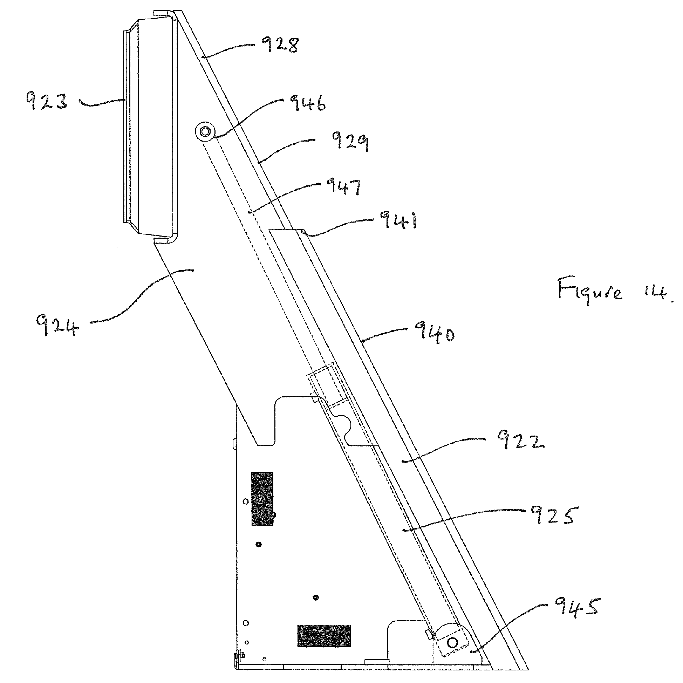

Each bumper 923 is movable from the retracted position of Figure 10 to the operative or in use position of Figure 11, by a respective hydraulic ram 925 (Figure 14) operated by a hydraulic motor 926, located within the base frame 921. The bumper assembly 920 comprising the base frame 921, bumper housings 922 and support frames 924 may be supplied as a unit or may be assembled on-site at a docking station.

Each bumper housing 922 has a pair of guide channels 927 in which is received a respective flange 928 of a rear wall 929 of the support frame 924. Each rear wall 929 and channel 927 are inclined diagonally with respect to a notional vertical axis so that movement of the support frame 924 is in a diagonal direction. The angle '0' of the rear wall 929 and bumper housing is within the range 10° to 45° from the vertical.

The guide channels 927 are of slightly greater width than the thickness of the flanges 928 so that in the operative position the bumper support frame 924 can move transversely relative to the bumper housing 922. The movement of the support frame 924 relative to the bumper housing 922 occurs in the operative or in use extended position of the bumpers, when the bumpers 923 are engaged by a transport vehicle at a loading dock.

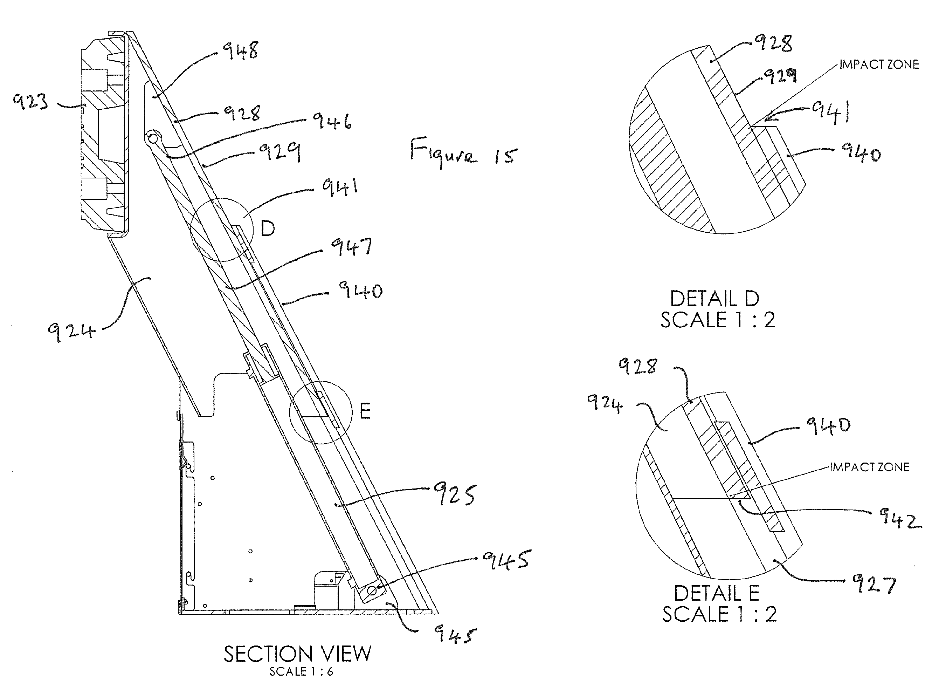

The movement of the bumper support frame 924 relative to the bumper housing 922 creates two impact zones D and E (Figure 15) on the bumper housing 922. One impact zone D is adjacent a top edge 941 of a rear wall 940 of the bumper housing 922. Another impact zone E is located in the guide channel 927 adjacent a lower edge 942 of the flanges 928 on the support frame 924.

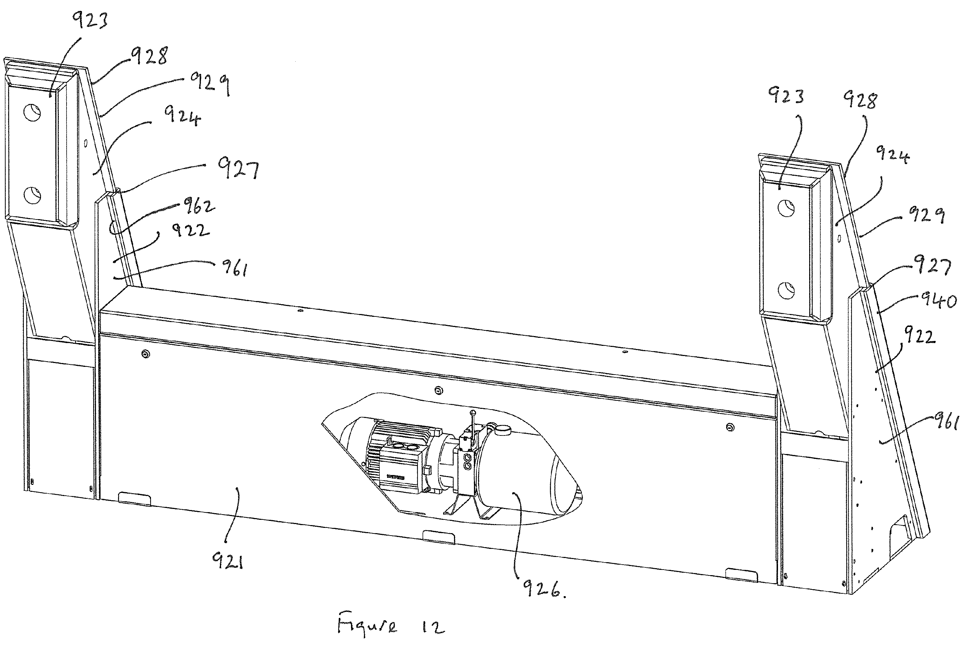

The hydraulic ram 925 is mounted to a bracket 945 fixed to the base of the bumper housing 922. The end 946 of the operating arm 947 of the ram 925 is attached to a bracket 948 which is fixed to the inner face of the rear wall 929 of the support frame 924. The bumper support frame 924 and bumper 923 are therefore supported by the hydraulic ram 925 and operation of the hydraulic ram 925 causes the support frame to move diagonally between a lower or retracted position as shown in Figure 10 to an operative or in use position as shown in Figure 12 in which the ram 925 is in its extended position. In this operative position the bumpers 923 extend upwardly and forwardly of the base frame 921, so that they can in use be engaged by a transport vehicle which reverses into a docking station at which the bumper assembly is mounted.

When in use, a transport vehicle impacts the bumpers 923, the bumper support frame 924 which is mounted to the hydraulic ram 925, pivots slightly rearwardly so that the rear wall 929 of the support frame 924 impacts against the top edge 941 of the rear wall 940 of the bumper housing 922, at impact zone D. Further, the lower edge 942 of the flange 928 impacts the inside surface of the guide channels 927 of the bumper housing 922. The bumper support frame 924 is enabled to pivot slightly as it is supported by the hydraulic ram 925 which can pivot on the bracket 945 and further by the fact that the guide channels 927 are of a slightly greater width than the thickness of the flanges 928.

The force of a transport vehicle impacting the bumpers 923 therefore creates two forces on the bumper housing - one force at impact zone D being directed generally rearwardly and a force at impact zone E which is directed in a generally forward directly in the guide channels 927.

It will be clear therefore that the impact force of a transport vehicle engaging against the bumpers 923 is borne by the bumper housing 922 and/or bumper support frame 924.

Any impact force is therefore substantially in a traverse direction to the operative direction of the hydraulic rams. This is particularly advantageous as the hydraulic rams do not bear any of the impact force.

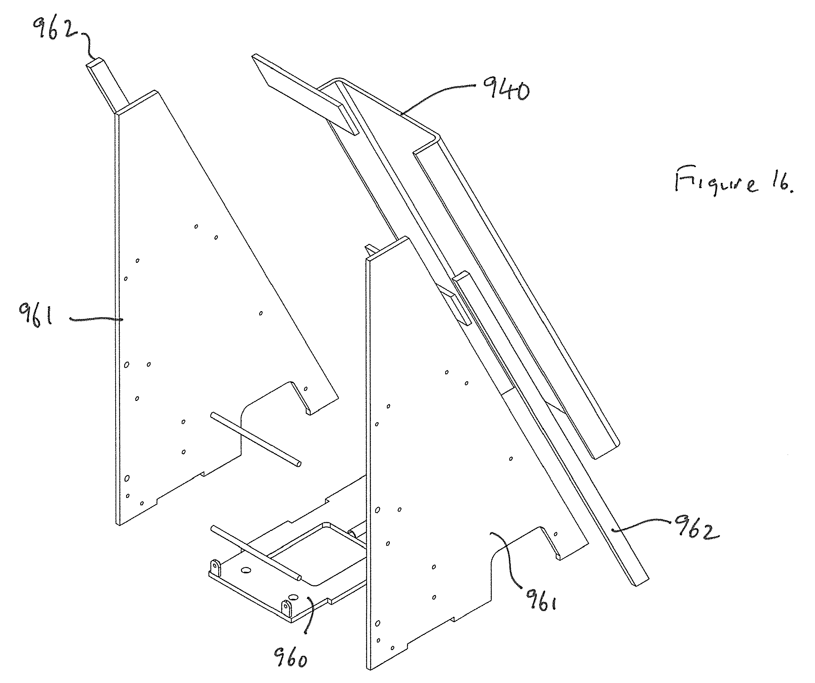

In Figure 16 there is shown one form of construction of bumper housing 922 comprising a base 960, sidewalls 961 a u-shaped rear wall 940 and a spacer channel bar 962. The spacer channel bar 962 and the side walls 961 are fixed to the rear wall 940 as seen in Figure 12 to define a guide channel 927 for the flange 928.

Limit switches (not shown) are provided to switch off the hydraulic motor 926 each time the support frame 924 reaches the extended or retracted position relative to the bumper housing 922.

It will be appreciated that in another embodiment of this aspect of the invention a single bumper 923 and bumper housing 922 could be disposed on or within the base frame 921. This would obviate the need for bumpers 923 at either end fo the base frame 921.

The invention has the advantage of being multi truck height compliant i.e. the bumper assembly 920 can be used in a docking station while enabling the docking station to be used by trucks of varying base height.

In particular the construction of bumper assembly 920 is robust, readily manufactured, and overcomes problems encountered with conventional fixed cantilevered and wall mounted bumpers. Since the hydraulic ram does not bear any of the impact load it is protected from damage.

The terms "comprise" and "include", and any variations thereof required for grammatical reasons, are to be considered as interchangeable and accorded the widest possible interpretation.

The invention is not limited to the embodiments hereinbefore described which may be varied in both construction and detail.

## Claims

1. A bumper assembly (920) for engaging a transport vehicle at a loading dock, comprising at least one moveable bumper (923) mounted in a bumper housing (922), wherein the bumper (923) is moveable relative to the bumper housing (922) from a retracted position to an operative position by an actuator comprising a hydraulic ram (925), wherein the bumper (923) is mounted on a support frame (924) which is moveable within the bumper housing (922), wherein the support frame (924) is of a hollow box frame structure, and **characterised in that** the bumper housing (922) has a pair of guide channels (927) in which are received flanges (928) of the support frame (924) to guide movement of the support frame (924) in a diagonal direction.

2. A bumper assembly (920) as claimed in Claim 1, wherein the guide channels (927) are of greater width than the thickness of the flanges (928) so that in the operative position the bumper support frame (924) can move transversely relative to the bumper housing (922).

3. A bumper assembly (920) as claimed in Claim 2, wherein the support frame (924) is moveable relative to the bumper housing (922) in the operative position when the at least one bumper (923) is engaged by a transport vehicle at a loading dock.

4. A bumper assembly (920) as claimed in Claim 1 or 2, wherein the movement of the support frame (924) creates two impact zones on the bumper housing (922).

5. A bumper assembly (920) as claimed in Claim 4, wherein one impact zone is adjacent a top edge (941) of a rear wall (940) of the bumper housing (922).

6. A bumper assembly as claimed in Claim 4, wherein another impact zone is in the guide channel (927) adjacent the lower edge (942) of the flanges (928) on the support frame (924).

7. A bumper assembly (920) as claimed in any one of Claims 1-6, wherein the bumper support frame (924) is mounted on the ram (925), which facilitates pivotal movement of the support frame (924) relative to the bumper housing (922).

8. A bumper assembly (920) as claimed in any one of Claims 4-7, wherein the bumper (923), bumper housing (922) and bumper support frame (924) are configured such that when the support frame (924) is moved into abutment with the bumper housing (922), the impact force of a transport vehicle against the bumper (923) is borne by the bumper housing (922) and/or bumper support frame (924).

9. A bumper assembly (920) as claimed in any one of Claims 1-8, wherein one end of the hydraulic ram (925) is mounted to a base of the bumper housing (922) and is mounted at the other end to a rear wall (929) of the box frame.

## Patentansprüche

1. Stoßfängeranordnung (920) zum Ineingrifftreten mit einem Transportfahrzeug an einem Ladedock, umfassend mindestens einen beweglichen Stoßfänger (923), der in einem Stoßfängergehäuse (922) angebracht ist, wobei der Stoßfänger (923) von einem einen Hydraulikkolben (925) umfassenden Antrieb relativ zu dem Stoßfängergehäuse (922) von einer eingezogenen Stellung in eine betriebsfähige Stellung beweglich ist, wobei der Stoßfänger (923) an einem Stützrahmen (924) angebracht ist, der in dem Stoßfängergehäuse (922) beweglich ist, wobei der Stützrahmen (924) eine Hohlkasten-Rahmenstruktur aufweist, und **dadurch gekennzeichnet, dass** das Stoßfängergehäuse (922) ein Paar Führungsnuten (927) aufweist, in denen Flansche (928) des Stützrahmens (924) aufgenommen sind, um die Bewegung des Stützrahmens (924) in einer Diagonalrichtung zu führen.

2. Stoßfängeranordnung (920) nach Anspruch 1, wobei die Führungsnuten (927) eine größere Breite aufweisen als die Dicke der Flansche (928), sodass sich in der betriebsfähigen Stellung der Stoßfänger-Stützrahmen (924) relativ zu dem Stoßfängergehäuse (922) in Querrichtung bewegen kann.

3. Stoßfängeranordnung (920) nach Anspruch 2, wobei der Stützrahmen (924) in der betriebsfähigen Stellung relativ zu dem Stoßfängergehäuse (922) beweglich ist, wenn ein Transportfahrzeug an einem Ladedock mit dem mindestens einen Stoßfänger (923) im Eingriff steht.

4. Stoßfängeranordnung (920) nach Anspruch 1 oder 2, wobei die Bewegung des Stützrahmens (924) zwei Aufprallzonen an dem Stoßfängergehäuse (922) erzeugt.

5. Stoßfängeranordnung (920) nach Anspruch 4, wobei eine Aufprallzone einem oberen Rand (941) einer Rückwand (940) des Stoßfängergehäuses (922) benachbart ist.

6. Stoßfängeranordnung nach Anspruch 4, wobei sich eine weitere Aufprallzone in der Führungsnut (927), dem unteren Rand (942) der Flansche (928) an dem Stützrahmen (924) benachbart, befindet.

7. Stoßfängeranordnung (920) nach einem der Ansprüche 1-6, wobei der Stoßfänger-Stützrahmen (924) an dem Kolben (925) angebracht ist, was die Schwenkbewegung des Stützrahmens (924) relativ zu dem Stoßfängergehäuse (922) erleichtert.

8. Stoßfängeranordnung (920) nach einem der Ansprüche 4-7, wobei der Stoßfänger (923), das Stoßfängergehäuse (922) und der Stoßfänger-Stützrahmen (924) derart ausgebildet sind, dass, wenn der Stützrahmen (924) zum Anliegen an dem Stoßfängergehäuse (922) bewegt wird, die Aufprallkraft eines Transportfahrzeugs gegen den Stoßfänger (923) von dem Stoßfängergehäuse (922) und/oder dem Stoßfänger-Stützrahmen (924) getragen wird.

9. Stoßfängeranordnung (920) nach einem der Ansprüche 1-8, wobei ein Ende des Hydraulikkolbens (925) an einem Boden des Stoßfängergehäuses (922) angebracht ist und am anderen Ende an einer Rückwand (929) des Kastenrahmens angebracht ist.

## Revendications

1. Ensemble butoir (920) pour mettre en prise un véhicule de transport à un quai de chargement, comprenant au moins un butoir mobile (923) monté dans un logement de butoir (922), dans lequel le butoir (923) peut être déplacé par rapport au logement de butoir (922) depuis une position rétractée jusqu'à une position opérationnelle par un actionneur comprenant un vérin hydraulique (925), dans lequel le butoir (923) est monté sur un cadre de support (924) qui peut être déplacé à l'intérieur du logement de butoir (922), dans lequel le cadre de support (924) a une structure de cadre de boîte creuse, et **caractérisé en ce que** le logement de butoir (922) possède une paire de canaux de guidage (927) dans lesquels sont reçues des brides (928) du cadre de support (924) pour guider le mouvement du cadre de support (924) en direction diagonale.

2. Ensemble butoir (920) selon la revendication 1, dans lequel les canaux de guidage (927) ont une largeur supérieure à l'épaisseur des brides (928) de manière à ce que, en position opérationnelle, le cadre de support du butoir (924) puisse se déplacer transversalement par rapport au logement de butoir (922).

3. Ensemble butoir (920) selon la revendication 2, dans lequel le cadre de support (924) peut être déplacé par rapport au logement de butoir (922) en position opérationnelle quand le au moins un butoir (923) est mis en prise par un véhicule de transport à un quai de chargement.

4. Ensemble butoir (920) selon la revendication 1 ou 2, dans lequel le mouvement du cadre de support (924) crée deux zones d'impact sur le logement de butoir (922).

5. Ensemble butoir (920) selon la revendication 4, dans lequel une zone d'impact est adjacente à un bord supérieur (941) d'une paroi arrière (940) du logement de butoir (922).

6. Ensemble butoir selon la revendication 4, dans lequel une autre zone d'impact se trouve dans le canal de guidage (927) en position adjacente au bord inférieur (942) des brides (928) sur le cadre de support (924).

7. Ensemble butoir (920) selon une quelconque des revendications 1 à 6, dans lequel le cadre de support du butoir (924) est monté sur le vérin (925), ce qui facilite le mouvement pivotant du cadre de support (924) par rapport au logement de butoir (922).

8. Ensemble butoir (920) selon une quelconque des revendications 4 à 7, dans lequel le butoir (923), le logement de butoir (922) et le cadre de support du butoir (924) sont configurés de manière à ce que, quand le cadre de support (924) est déplacé jusqu'à venir en butée contre le logement de butoir (922), la force d'impact d'un véhicule de transport contre le butoir (923) est supportée par le logement de butoir (922) et/ou le cadre de support du butoir (924).

9. Ensemble butoir (920) selon une quelconque des revendications 1 à 8, dans lequel une extrémité du vérin hydraulique (925) est montée sur une base du logement de butoir (922) et est montée à l'autre extrémité sur une paroi arrière (929) du cadre en boîte.
